# EUROPEAN PATENT APPLICATION

(11) **EP 3 761 473 A1**
(43) Date of publication of application: **06.01.2021**
(21) Application number: 18907941.1
(22) Date of filing: 28.02.2018
(51) Int. Cl.: H02J 7/00

(54) **BATTERY CONTROL CIRCUIT, POWER SUPPLY CONTROL SYSTEM, AND MOVABLE PLATFORM**

(71) Applicant: SZ DJI Technology Co., Ltd., Shenzhen, Guangdong 518057 (CN)
(72) Inventor: HU, Jingang, Shenzhen, Guangdong 518057 (CN)
(74) Representative: Goddar, Heinz J.
(86) International application number: PCT/CN2018/077617
(87) International publication number: WO 2019/165609

(57) **Abstract**

The disclosure provides a battery control circuit, a power supply control system and a mobile platform. The battery control circuit includes: a controller configured to control operation state of the battery; a communication signal line configured to electrically connect the controller and the battery to enable the connection between the controller and the battery; an operation switch electrically connected to the communication signal line, being configured to transmit a to battery through communication signal line to control the battery to supply power to controller; and a switch circuit electrically connected between the operation switch and communication signal line , being configured to control the communication between the operation switch and the communication signal line to be connected or disconnected.

## Description

### TECHNICAL FIELD

The embodiments of the present disclosure relate to the technical field of unmanned aerial vehicles (UAVs), in particular to a battery control circuit, a power supply control system and a mobile platform.

### BACKGROUND TECHNOLOGY

Battery is an essential component of the UAV. A battery can supply power to the UAV to drive the operation of the UAV. A battery bay may be disposed in the UAV, and the battery bay is configured to accommodate the battery. After being inserted into the battery bay of the UAV, the battery is connected to the UAV, and then the battery supplies power to the UAV. Before the battery is inserted into the battery bay of the UAV, the UAV is in a shutdown state. After the battery is inserted into the battery bay of the UAV, the UAV is powered on by the power supplied by the battery.

Generally, the battery can supply power to the UAV through a power cord. The power cord includes: a high-voltage output line and a low-voltage output line. The low-voltage output line is configured to wake up a battery management system, and the high-voltage output line is configured to supply power that is required for a start-up. And the battery is also connected to a switch button of the UAV through a switch signal line. After the battery is inserted into the battery bay of the UAV, the high-voltage output line does not output voltage, and when the user presses the switch button, the output voltage of the low-voltage output line is controlled. The voltage output by the low-voltage output line is configured to wake up the battery management system. The battery management system determines whether a voltage difference of each battery satisfies start-up conditions. If the start-up conditions are satisfied, the high-voltage output line of the battery is controlled to output power to control the startup of the UAV. In addition, the battery is also connected to a flight controller of the UAV through a communication signal line, so that the battery transmits the electrical parameters of the battery to the flight controller through the communication signal line.

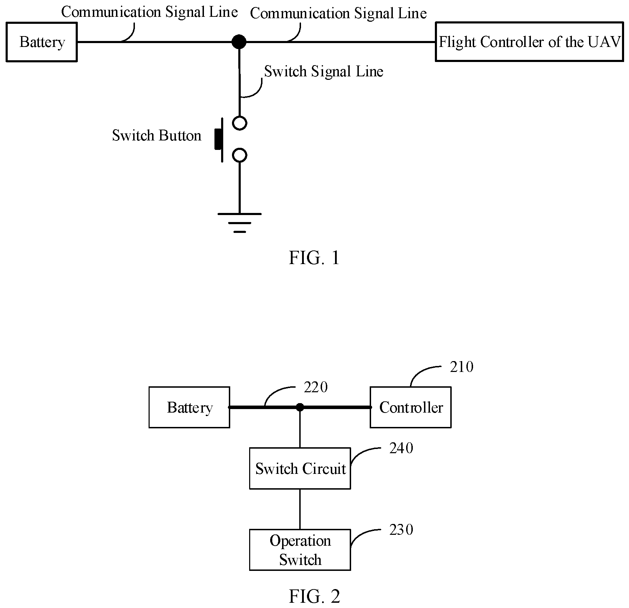

At present, the above-mentioned switch signal line can be connected to the communication signal line to combine a pin of the switch signal line with a pin of the communication signal line into one pin to reduce the number of the pins of the battery, thereby reducing the volume. As shown in FIG. 1, FIG. 1 is a schematic diagram of a circuit for waking up a battery in the existing technology. When a user presses the switch button, a voltage level of a port connected to the communication signal line of the battery may be pulled down, which drives the low-voltage signal line to output voltage to control the start-up of the UAV. After the UAV is started, the battery outputs the electrical parameters to the flight controller through the communication signal line shown in FIG. 1.

However, when the switch signal line is connected to the communication signal line, if the user operates the switch button of the UAV by mistake, the communication between the battery and the flight controller can be interfered with, which may result in data loss.

### SUMMARY OF THE DISCLOSURE

Embodiments of the present disclosure provide a battery control circuit, a power supply control system, and a mobile platform, which is used to prevent communication between a battery and a controller from being interfered with even if a user mistakenly operates an operation switch, thereby ensuring normal transmission of communication data.

In a first aspect, an embodiment of the present disclosure provides a battery control circuit, including: a controller configured to control the operation state of the battery; a communication signal line configured to be connected to the controller and the battery to connect the controller with the battery; an operation switch connected to the communication signal line, being configured to transmit a switch signal to the battery through the communication signal line to control the battery to supply power to the controller; and a switch circuit connected between the operation switch and the communication signal line, being configured to control communication between the operation switch and the communication signal line to be connected or disconnected.

After the operation switch controls the battery to supply power to the controller, the switch circuit controls the communication between the operation switch and the communication signal line to be disconnected to prevent the operation switch from transmitting the switch signal to the communication signal line.

In a second aspect, an embodiment of the present disclosure provides a power control system, including: the battery control circuit and at least one battery according to the embodiment of the present disclosure in the first aspect.

The battery control circuit is configured to control the at least one battery to supply power.

In a third aspect, an embodiment of the present disclosure provides a mobile platform, including: a body, a power system, and the power control system described in the second aspect of the embodiment of the present disclosure.

The battery control circuit and the at least one battery are installed in the body.

The at least one battery is configured to supply power to the power system.

The power system is configured to supply motion power to the mobile platform.

In the battery control circuit, the power supply control system and the mobile platform provided by the embodiments of the present disclosure, by setting a switch circuit between the operation switch and the communication signal line, the switch circuit can control the communication between the operation switch and the communication signal line to be connected or disconnected. After the operation switch controls the battery to supply power to the controller, the switch circuit controls the communication between the operation switch and the communication signal line to be disconnected. Therefore, even if the user operates the operation switch by mistake, the operation switch cannot affect the communication signal line, thereby not affecting the communication between the battery and the controller, which ensures the normal data transmission between the battery and the controller.

### BRIEF DESCRIPTION OF THE DRAWINGS

In order to more clearly explain the embodiments of the present disclosure or the technical solutions in the existing technology, the following will briefly introduce the drawings used in the description of the embodiments or the existing technology. Apparently, the drawings in the following description are some embodiments of the present disclosure. For those of ordinary skill in the art, without making any creative efforts, other drawings can be obtained based on these drawings.
FIG. 1 is a schematic structural diagram of a circuit for waking up a battery in the existing technology;
FIG. 2 is a schematic structural diagram of a battery control circuit according to an embodiment of the present disclosure;
FIG. 3 is a schematic structural diagram of the battery control circuit according to another embodiment of the present disclosure;
FIG. 4 is a schematic structural diagram of the battery control circuit according to another embodiment of the present disclosure;
FIG. 5 is a schematic structural diagram of the battery control circuit according to another embodiment of the present disclosure;
FIG. 6 is a schematic structural diagram of the battery control circuit according to another embodiment of the present disclosure;
FIG. 7 is a schematic structural diagram of the battery control circuit according to another embodiment of the present disclosure;
FIG. 8 is a schematic structural diagram of the battery control circuit according to another embodiment of the present disclosure;
FIG. 9 is a schematic structural diagram of the battery control circuit according to another embodiment of the present disclosure;
FIG. 10 is a schematic structural diagram of a power control system according to an embodiment of the present disclosure; and
FIG. 11 is a schematic structural diagram of a mobile platform according to an embodiment of the present disclosure.

### DETAILED DESCRIPTION OF THE EMBODIMENTS

To make the objectives, technical solutions, and advantages of the embodiments of the present disclosure more clear, the technical solutions in the embodiments of the present disclosure will be described clearly and completely in conjunction with the drawings in the embodiments of the present disclosure. Apparently, the described embodiments are some embodiments of the present disclosure, but not all the embodiments. Based on the embodiments of the present disclosure, all other embodiments obtained by a person of ordinary skill in the art without creative efforts fall within the scope of the disclosure.

FIG. 2 is a schematic structural diagram of a battery control circuit according to an embodiment of the present disclosure. As shown in FIG. 2, the battery control circuit of this embodiment may include: a controller 210, a communication signal line 220, an operation switch 230, and a switch circuit 240.

The controller 210 is configured to control the operation state of the battery.

The communication signal line 220 is configured to electrically connect the controller 210 and the battery, so that the controller 210 and the battery can be connected.

The operation switch 230 is electrically connected to the communication signal line 220, being configured to transmit a switch signal to the battery through the communication signal line 220, to control the battery to supply power to the controller 210.

The switch circuit 240 is electrically connected between the operation switch 230 and the communication signal line 220, and is configured to control the communication between the operation switch 230 and the communication signal line 220 to be connected or disconnected.

After the operation switch 230 controls the battery to supply power to the controller 210, the switch circuit 240 controls the communication between the operation switch 230 and the communication signal line 220 to be disconnected to prevent the operation switch 230 from transmitting the switch signal to the communication signal line 220.

In this embodiment, the controller 210 may be connected to the battery through the communication signal line 220, and the controller 210 controls the operation state of the battery through the communication signal line 220. Electrical parameters of the battery can be transmitted to the controller 210 through the communication signal line 220. The electrical parameters of the battery may include, for example, at least one of the following: voltage, current, etc. The controller 210 can control the operation state of the battery according to the electrical parameters of the battery. For example, the controller 210 may control the battery to supply power to the powered device when the electrical parameters of the battery satisfy certain conditions, and drive the powered device to operate.

In this embodiment, a switch circuit 240 is disposed between the operation switch 230 and the communication signal line 220. The switch circuit 240 can control the communication between the operation switch 230 and the communication signal line 220 to be connected or disconnected. When the switch circuit 240 controls the communication between the operation switch 230 and the communication signal line 220, the operation switch 230 may transmit a switch signal to the battery through the communication signal line 220. After the battery receives the switch signal, the battery supplies power to the controller 210, so that the controller 210 can operate, and then the controller 210 can control the operation state of the battery. When the switch circuit 240 controls the communication between the operation switch 230 and the communication signal line 220 to be disconnected, the communication signal line 220 cannot receive the signal from the operation switch 230. Therefore, even if the user operates the operation switch 230 by mistake, the operation switch 230 cannot affect the communication signal line 220, and accordingly, the communication between the battery and the controller 210 cannot be affected, which ensures the normal date transmission between the battery and the controller 210.

The state of the operation switch 230 may be, for example, a connected state or a disconnected state. If the operation switch 230 is in the connected state, the operation switch 230 may transmit a switch signal, and if the operation switch 230 is a connected state, the operation switch 230 cannot send out the switch signal.

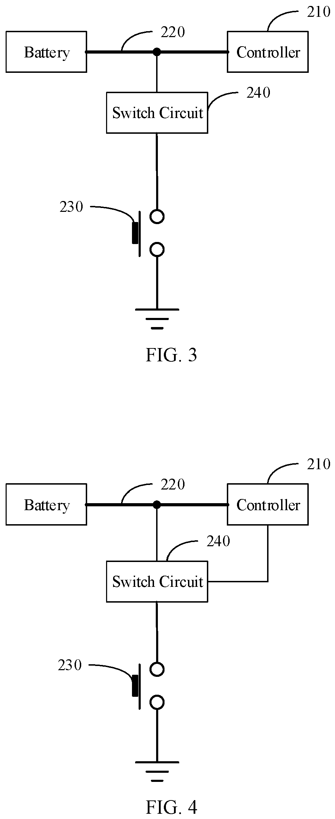

In some embodiments, the operation switch 230 may be, for example, a knob switch or a button switch, which is not limited in this embodiment. FIG. 3 illustrates the operation switch 230 as a button switch as an example, and FIG. 3 shows that the key switch is grounded, but this embodiment is not limited to this. When the operation switch 230 is a button switch, the user presses the button switch. At this time, the button switch is connected. When the switch circuit 240 controls the communication between the button switch and the communication signal line 220, the button switch can transmit a low voltage level signal to the battery. The low voltage level signal can be regarded as the switch signal. The battery starts to supply power to the controller 210 after receiving the low voltage level signal. When the switch circuit 240 controls the communication between the button switch and the communication signal line 220 to be disconnected, the voltage level signal transmitted by the button switch cannot interfere with the communication signal line 220.

FIG. 4 is a schematic structural diagram of the battery control circuit according to another embodiment of the present disclosure. As shown in FIG. 4, the battery control circuit of this embodiment is based on the battery control circuit shown in FIG. 2 or FIG. 3, and the switch circuit 240 is electrically connected to the controller 210. The controller 210 is configured to control the switch circuit to be disconnected after the battery supplies power to the controller to control the communication between the operation switch and the communication signal line to be disconnected.

In this embodiment, before the battery supplies power to the controller 210, the switch circuit 240 is connected. It can also be considered that the switch circuit 240 is normally connected. When the switch circuit 240 is connected, the switch circuit 240 controls the communication of the switch 230 and the communication signal line 220. After the battery supplies power to the controller 210, the controller 210 controls the switch circuit 240 to be disconnected. When the switch circuit 240 is disconnected, the switch circuit 240 controls the communication between the operation switch 230 and the communication signal line 220 to be disconnected.

In other embodiments, the disconnection of the switch circuit 240 may not be controlled by the controller 210. Reference may be made to the battery control circuit shown in FIG. 2 or

FIG. 3 for details. The switch circuit 240 is configured to be automatically disconnected after the battery supplies power to the controller 210. In this embodiment, before the battery supplies power to the controller 210, the switch circuit 240 is connected. It can also be considered that the switch circuit 240 is normally connected. When the switch circuit 240 is connected, the switch circuit 240 controls the communication between the operation switch 230 and the communication signal line 220. After the battery supplies power to the controller 210, the switch circuit 240 is automatically disconnected. When the switch circuit 240 is connected, the switch circuit 240 controls the communication between the operation switch 230 and the communication signal line 220 to be disconnected.

Based on the above embodiments, the switch circuit 240 may include an electronic switch. The electronic switch includes at least one of the following: an insulated gate bipolar transistor, a metal-oxide semiconductor field-effect transistor (MOSFET), a solid state relay, and a thyristor.

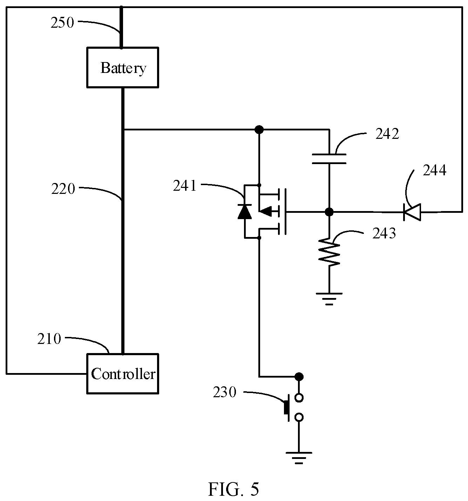

FIG. 5 is a schematic structural diagram of the battery control circuit according to another embodiment of the present disclosure. As shown in FIG. 5, in this embodiment, a switch circuit 240 including a MOSFET is taken as an example for description. The battery control circuit of this embodiment is based on the battery control circuit shown in FIG. 2 or FIG. 3, and the above-mentioned switch circuit 240 includes a first MOSFET 241. The first MOSFET 241 can control the communication between the operation switch 230 and the communication signal line 220 to be connected or disconnected. The first MOSFET 241 is configured to control the communication between the operation switch 230 and the communication signal line 220 to be connected when the first MOSFET 241 is connected, and to control the communication between the operation switch 230 and the communication signal line 220 to be disconnected when the first MOSFET 241 is disconnected.

In some embodiments, the first MOSFET 241 is configured to: be connected when the voltage level difference between a source electrode of the first MOSFET 241 and a gate electrode of the first MOSFET 241 satisfies a preset condition to control the communication between the operation switch 230 and the communication signal line 220 to be connected; and be disconnected when the voltage level difference between the source electrode of the first MOSFET 241 and the gate electrode of the first MOSFET 241 does not satisfy the preset condition to control the communication between the operation switch 230 and the communication signal line 220 to be disconnected.

In some embodiments, the above-mentioned switch circuit 240 further includes a first capacitor 242 and a first resistor 243. Both ends of the first capacitor 242 are electrically connected to the source electrode and the gate electrode of the first MOSFET 241, respectively. The gate electrode of the first MOSFET 241 is electrically connected between the first capacitor 242 and the first resistor 243, and the source electrode of the first MOSFET 241 is electrically connected between the communication signal line 220 and the first capacitor 242. A drain electrode of the first MOSFET 241 is electrically connected to the operation switch 230. In this embodiment, the switch circuit 240 controls the connection or disconnection of the MOSFET through the disposed first capacitor 242 and the first resistor 243.

In some embodiments, the first capacitor 242 is configured to: be charged through the first resistor 243 when the first MOSFET 241 is disconnected, and to control the voltage level of the gate electrode to drop during charging until the voltage level difference between the source electrode and the gate electrode satisfies the preset condition; and discharge through the first resistor 243 when the first MOSFET 241 is connected, and to control the voltage level of the gate electrode of the first MOSFET 241 to rise during discharging until the voltage level difference between the source electrode and the gate electrode does not satisfy the preset condition.

In this embodiment, when the battery is inserted into the battery control circuit, the battery outputs a high voltage level (e.g., 3.3V or 5V, etc.) to the communication signal line 220. Accordingly, the voltage level of the source electrode of the first MOSFET 241 is a high voltage level, and the source electrode of the first MOSFET 241 is sequentially connected to the first capacitor 242 and the first resistor 243. The first resistor 243 in this embodiment can be grounded, so the first capacitor 242 can be charged through the first resistor 243. Since the gate of the first MOSFET 241 is connected between the first capacitor 242 and the first resistor 243, during the charging of the first capacitor 242 through the first resistor 243, the voltage level of the gate electrode of the first MOSFET 241 drops, when the voltage level of the gate electrode of the first MOSFET 241 drops to where the voltage level difference between the source electrode of the first MOSFET and the gate electrode of the first MOSFET 241 satisfies the preset condition, the first MOSFET 241 is connected, so that the communication between the operation switch 230 and the communication signal line 220 is connected.

FIG. 5 shows the operation switch 230 as an example of the button switch. An end of the button switch is grounded. Therefore, when the user presses the operation switch 230, the operation switch 230 is in a connected state. Since the operation switch 230 is grounded, the voltage level of the operation switch 230 is pulled down to a low voltage level (for example, 0V), and accordingly, the voltage level of the drain electrode of the first MOSFET 241 electrically connected to the operation switch 230 is also pulled down to a low voltage level. In addition, since the first MOSFET 241 is connected, the voltage level of the drain electrode of the first MOSFET 241 affects the voltage level of the source electrode of the first MOSFET, so that the voltage level of the source electrode of the first MOSFET 241 is pulled down to a low voltage level. Since the source electrode of the first MOSFET 241 is electrically connected to the battery through the communication signal line 220, therefore, when the voltage level of the source electrode of the first MOSFET 241 is low, the voltage level of the communication signal line 220 is also low. When the battery detects the low voltage level through the communication signal line 220, the battery starts to supply power to the controller 210.

After the source electrode of the first MOSFET is pulled down to the low voltage level, the first capacitor 242 can discharge, so that the voltage level of the gate electrode of the first MOSFET 241 rises, and then voltage level difference between the source electrode of the first MOSFET 241 and the gate electrode of the first MOSFET 241 can change. When the voltage level difference between the source electrode of the first MOSFET 241 and the gate electrode of the first MOSFET does not satisfy the preset condition, the first The MOSFET 241 is disconnected. When the first MOSFET 241 is disconnected, the communication between the operation switch 230 and the communication signal line 220 is also disconnected. Therefore, even if the user operates the operation switch 230 by mistake, the communication signal line 220 cannot be interfered with.

In some embodiments, the battery control circuit of this embodiment further includes: a power supply signal line 250. The power supply signal line 250 is configured to electrically connected the controller 210 with the battery, so that the battery supplies power to the controller through the power supply signal line 250. The controller 210 in this embodiment is also electrically connected to the battery through the power supply signal line 250, and the battery supplies power to the controller 210 through the power supply signal line. The output voltage level of the battery is a high voltage level (e.g., 3.3V or 5V, etc.) when the battery supplies power to the controller 210 through the power supply signal line.

The switch circuit 240 of this embodiment further includes a first diode 244. The negative electrode of the first diode 244 is electrically connected to the gate electrode of the first MOSFET 241, and the positive electrode of the first diode 244 is electrically connected to the power supply signal line 250. In this embodiment, after starting to supply power to the controller 210, the battery also supplies power to the gate electrode of the first MOSFET 241 through the power supply signal line 250 to control the voltage level of the gate electrode of the first MOSFET 241 to rise. In this embodiment, the battery supplies power to the controller 210 through the power supply signal line 250, and the anode of the first diode 244 is also electrically connected to the power supply signal line 250. After the battery starts to supply power to the controller 210, the voltage level of the battery output through the power supply signal line is the high voltage level. Since the anode of the first diode 244 is electrically connected to the power supply signal line, when the battery outputs high power through the power supply signal line, the first diode 244 is connected, and then the battery supplies power to the gate electrode of the first MOSFET 241. The voltage level of the gate electrode of the first MOSFET 241 rises until the voltage level of the gate electrode of the first MOSFET 241 is equal to output voltage level of the battery. At this time, the voltage level of the gate electrode of the first MOSFET 241 is a high voltage level. Accordingly, after the battery starts to supply power to the controller, the voltage level of the gate electrode of the first MOSFET 241 is the high voltage level, which causes the voltage level difference between the source electrode of the first MOSFET 241 and the gate electrode of the first MOSFET 241 not to meet the preset condition, so that the first MOSFET 241 can be locked, that is, the first MOSFET 241 is in a disconnected state. Therefore, in this embodiment, the gate electrode of the first MOSFET 241 is electrically connected to the first diode 244, and the first diode 244 is electrically connected to the battery, which ensures that after the battery supplies power to the controller 210, the first MOSFET 241 cannot be connected.

The first diode 244 can prevent the high voltage level of the source electrode of the first MOSFET 241 from being pulled down to a low voltage level by the first capacitor 242 and the power supply signal line 250 connected to the battery when the battery is inserted into the battery control circuit, to avoid supplying power to the controller without the control of the operation switch as soon as the battery is inserted into the battery control circuit.

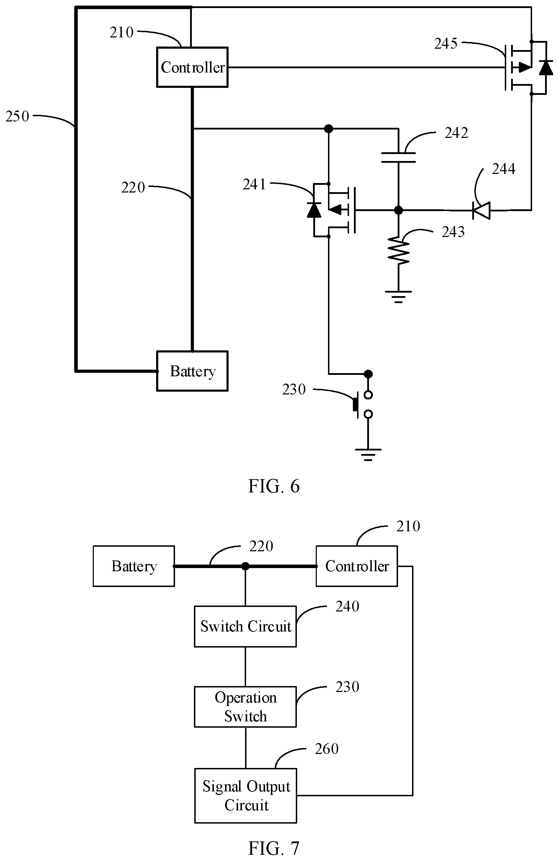

FIG. 6 is a schematic structural diagram of the battery control circuit according to another embodiment of the present disclosure. As shown in FIG. 6, the battery control circuit of this embodiment is based on the battery control circuit shown in FIG. 5. The switch circuit 240 further includes a second MOSFET 245. The second MOSFET 245 is electrically connected between the first diode 244 and the power supply signal line 250. The second MOSFET 245 is configured to control the electrical connection between the first diode 244 and the power supply signal line 250, so that the battery supplies power to the gate electrode of the first MOSFET 241.

When the second MOSFET 245 is connected, the first diode 244 and the power supply signal line 250 are electrically connected, and then the battery can supply power to the gate electrode of the first MOSFET 241 through the power supply signal line 250.

In some embodiments, the second MOSFET 245 is also electrically connected to the controller 210. The controller 210 is configured to control the second MOSFET 245 to be connected to control the first diode 244 and the power supply signal line 250 to be electrically connected. The second MOSFET 245 is controlled by the controller 210. The controller 210 controls the connection or disconnection of the second MOSFET. The second MOSFET 245 can be considered normally disconnected. After the battery supplies power to the controller 210, the controller controls the second MOSFET 245 to be connected. When the second MOSFET 245 is connected, the first diode 244 and the power supply signal line 250 are also electrically connected, and then the battery can supply power to the gate electrode of the first MOSFET 241 through the power supply signal line 250.

In some embodiments, the source electrode of the second MOSFET 245 is electrically connected to the power supply signal line 250, the gate electrode of the second MOSFET 245 is electrically connected to the controller 210, and the drain electrode of the second MOSFET 245 is electrically connected to the anode of the first diode 244.

The controller 210 is configured to: control the voltage level of the gate electrode of the second MOSFET 245 to drop, until the second MOSFET is disconnected when the voltage level difference between the source electrode of the second MOSFET 245 and the gate electrode of the second MOSFET 245 satisfies the preset condition.

In this embodiment, after the battery supplies power to the controller 210, since the source electrode of the second MOSFET 245 is electrically connected to the power supply signal line, the voltage level of the source electrode of the second MOSFET 245 is a high voltage level, and the controller 210 controls the voltage level of the gate electrode of the second MOSFET 245 to drop. For example, the controller 210 is electrically connected to the gate electrode of the second MOSFET 245. The controller 210 can send a low voltage level signal to the gate electrode of the second MOSFET 245, so that the voltage level of the gate electrode of the second MOSFET 245 is low, and accordingly, the second MOSFET 245 is connected, and after the second MOSFET 245 is connected, the battery can supply power to the gate electrode of the first MOSFET.

FIG. 7 is a schematic structural diagram of the battery control circuit according to another embodiment of the present disclosure. As shown in FIG. 7, the battery control circuit of this embodiment further includes a signal output circuit 260 based on the foregoing embodiments. The signal output circuit 260 is electrically connected between the operation switch 230 and the controller 210.

The signal output circuit 260 is configured to output different voltage levels to the controller according to different states of the operation switch 230 after the operation switch 230 controls the battery to start to supply power to the controller.

The controller 210 is configured to output a corresponding control signal according to the voltage level output by the signal output circuit 260.

In this embodiment, after the operation switch 230 controls the battery to start to supply power to the controller 210, the switch circuit 240 also controls the communication between the operation switch 230 and the communication signal line 220 to be disconnected, and the user operates the operation switch 230 without interfering with the communication signal line. In addition, in this embodiment, a signal output circuit 260 may be also disposed between the operation switch 230 and the controller 210. The user can operate the operation switch 230 so that the operation switch 230 is in a different state. Since the signal output circuit 260 is electrically connected to the operation switch 230 and the operation switch 230 is in the different state, the signal output circuit 260 can output different voltage levels to the controller 210, and then the controller 210 can output the corresponding control signal according to the voltage level output by the signal output circuit 260. Therefore, after the communication between the operation switch 230 and the communication signal line 220 is disconnected, the user can also implement other control functions by operating the operation switch 230.

In some embodiments, the control signal includes at least one of the following: a control signal configured to control the battery to reset and restart, and a control signal configured to control the powered device to perform a corresponding action.

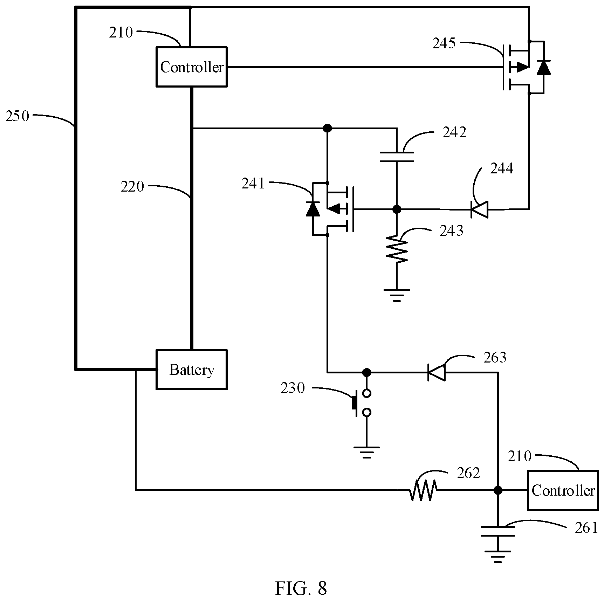

FIG. 8 is a schematic structural diagram of the battery control circuit according to another embodiment of the present disclosure. As shown in FIG. 8, this embodiment is based on the foregoing embodiment, and the signal output circuit 260 includes: a second capacitor 261, and a second resistance 262.

The second resistor 262 is electrically connected between the second capacitor 261 and the battery, and the controller 210 is electrically connected to the second capacitor 261.

The second capacitor 261 is configured to: be charged through the second resistor 262 and output a high voltage level to the controller 210 when the operation switch 230 is in the disconnected state after the battery starts to supply power to the controller 210; and discharge when the operation switch 230 is in the disconnected state and output a low voltage level to the controller 210.

In this embodiment, the second resistor 262 is electrically connected between the second capacitor 261 and the battery. For example, the second resistor 262 is electrically connected to the power supply signal line through which the battery supplies power to the controller 210. After the battery 210 starts to supply power to the controller 210, the output voltage level of the power supply signal line is a high voltage level. If the user operates the operation switch 230 to be in the disconnected state, the battery charges the second capacitor 261 through the power supply signal line and the second resistor 262. When the second capacitor 261 is charged, since the controller 210 is electrically connected between the second capacitor 261 and the second resistor 262, a low voltage level of the controller 210 can be detected. If the user operates the operation switch 230 to be in the connected state, the second capacitor 261 may discharge, and the low voltage level of the controller 210 can be detected. Then, the controller 210 may output a corresponding control signal according to at least one of the following as detected: a low voltage level duration, a high voltage level duration, low voltage level times, and high voltage level times.

In some embodiments, the signal output circuit 260 further includes: a second diode 263. An anode of the second diode 263 is electrically connected between the second resistor 262 and the second capacitor 261. A cathode of the second diode 263 is electrically connected between the switch circuit 240 and the operation switch 230. The second diode 263 of this embodiment can prevent the drain electrode of the first MOSFET 241 from being pulled down from a high voltage level to a low voltage level before the button switch transmits a switch signal to the battery, and avoid supplying power to the controller when the battery is inserted into the battery control circuit without the control of the operation switch.

It should be noted that the two controllers 210 shown in FIG. 8 are actually the same controller 210.

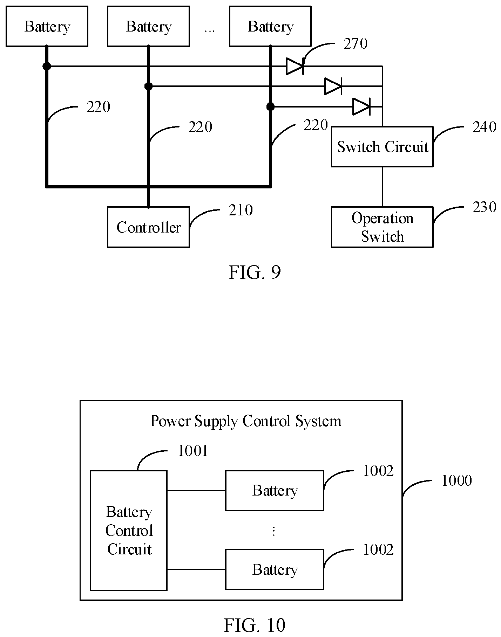

FIG. 9 is a schematic structural diagram of the battery control circuit according to another embodiment of the present disclosure. As shown in FIG. 9, the battery control circuit of this embodiment is based on any of the above embodiments, the number of the batteries and the number of the communication signal lines 220 are all N. N is an integer greater than or equal to 2, and the N number of batteries are electrically connected to the N number of communication signal lines in correspondence. The N number of the communication signal lines 220 are connected to the switch circuit 240 in parallel.

Since the N number of communication signal lines 220 are connected in parallel to the switch circuit 240, the switch circuit 240 can control the communication between the operation switch 230 and the N number of communication signal lines 220, and the operation switch 230 can send the switch signal to the N number of batteries respectively through the N number of communication signal lines 220 to control the N number of batteries to supply power to the controller 210. Therefore, as long as any one of the N number of the communication signal lines 220 is electrically connected to the battery, the battery control circuit of this embodiment can control the battery to supply power. In the existing technology, as shown in FIG. 1, the switch button is electrically connected to a communication signal line. If the powered device can be powered by multiple batteries, only when the battery is inserted into the powered device and connected to communication signal line to which the switch button is connected, the switch button can control the battery to supply power to the controller. If the battery is inserted into the powered device but is not connected to the communication signal line to which the switch button is connected, the switch button cannot control the battery to supply power to the controller. Therefore, the switch button in the existing technology can only control one battery to supply power to the controller. The embodiment of the present disclosure circumvents the defects in the existing technology. As long as a battery is inserted into the powered device to be electrically connected to the communication signal line, the battery in this embodiment can be controlled to supply power to the controller. Therefore, in this embodiment, multiple batteries may be controlled to supply power to the controller.

In some embodiments, the battery control circuit of this embodiment further includes: N number of third diodes 270. Anodes of the N third diodes 270 are connected in parallel to the switch circuit 240, and cathodes of N number of the third diodes 270 are electrically connected to the N number of the communication signal lines 220 in correspondence. The third diode 270 of this embodiment can avoid mutual interference of data between the batteries.

FIG. 10 is a schematic structural diagram of a power supply control system according to an embodiment of the present disclosure. As shown in FIG. 10, the power supply control system 1000 of this embodiment may include: a battery control circuit 1001 and at least one battery 1002. The battery control circuit 1001 is configured to control the at least one battery 1002 to supply power. The battery control circuit 1001 may implement the structure of any of the foregoing embodiments, and its implementation principles and technical effects are similar, and will not be repeated here.

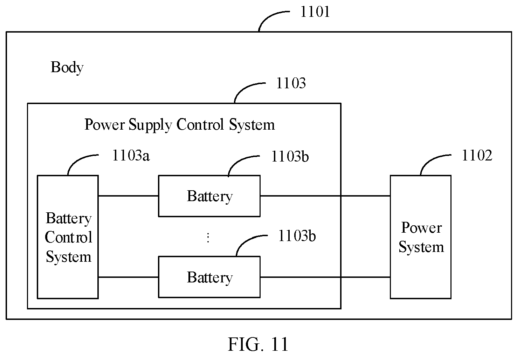

FIG. 11 is a schematic structural diagram of a mobile platform according to an embodiment of the present disclosure. As shown in FIG. 11, the mobile platform of this embodiment may include: a body 1101, a power system 1102, and a power control system 1103. The power supply control system 1103 may implement the structure of the foregoing embodiment, and its implementation principles and technical effects are similar, which will not be repeated here.

A battery control circuit 1103a and at least one battery 1103b of the power supply control system 1103 are installed in the body 1101. The at least one battery 1103b may be externally attached to the body 1101, or may be installed inside the body 1101.

The at least one battery 1103b is configured to supply power to the power system 1102;

The power system 1102 is configured to supply motion power to the mobile platform.

In some embodiments, the mobile platform is a UAV or a ground remote control robot.

Finally, it should be noted that the above embodiments are only used to illustrate the technical solution of the present disclosure, rather than to limit it. Although the disclosure has been described in detail with reference to the foregoing embodiments, those of ordinary skill in the art should understand that the technical solutions described in the foregoing embodiments can still be modified, or some or all of the technical features can be equivalently replaced. These modifications or replacements do not depart the essence of the corresponding technical solutions from the scope of the technical solutions of the embodiments of the present disclosure.

## Claims

1. A battery control circuit, comprising:
a controller configured to control an operation state of the battery;
a communication signal line configured to electrically connect the controller with the battery to enable the connection between the controller and the battery;
an operation switch electrically connected to the communication signal line, being configured to send a switch signal to the battery through the communication signal line to control the battery to supply power to the controller; and
a switch circuit electrically connected between the operation switch and the communication signal line, configured to control the connection or a disconnection between the operation switch and the communication signal line; wherein:
after the operation switch controls the battery to start to supply power to the controller, the switch circuit controls the communication between the operation switch and the communication signal line to be disconnected to prevent the operation switch from transmitting a switch signal to the communication signal line.

2. The battery control circuit according to claim 1, wherein the switch circuit comprises a first metal-oxide semiconductor field-effect transistor (MOSFET),
the first MOSFET being configured to: when a voltage level difference between a source electrode of the first MOSFET and a gate electrode of the first MOSFET satisfies a preset condition, be connected, to control the communication between the operation switch and the communication signal line to be connected; when the voltage level difference between the source electrode of the first MOSFET and the gate electrode of the first MOSFET does not satisfy the preset condition, to be disconnected, to control the communication between the operation switch and the communication signal line to be disconnected.

3. The battery control circuit according to claim 2, wherein the switch circuit further comprises: a first capacitor and a first resistor;
both ends of the first capacitor being electrically connected to the source electrode and the gate electrode of the first MOSFET, the gate electrode of the first MOSFET being electrically connected between the first capacitor and the first resistor, the source electrode of the first MOSFET being electrically connected between the communication signal line and the first capacitor, and a drain electrode of the first MOSFET being electrically connected to the operation switch.

4. The battery control circuit according to claim 3, wherein:
the first capacitor is configured to: be charged through the first resistor when the first MOSFET is disconnected, and control voltage level of the gate electrode to drop during the charging until the voltage level difference between the source electrode and the gate electrode satisfies the preset condition; and discharge through the first resistor when the first MOSFET is connected, and control voltage level of the gate electrode of the first MOSFET to rise during the discharging until the voltage level difference between the source electrode and the gate electrode does not satisfy the preset condition.

5. The battery control circuit according to claim 4, further comprising:
a power supply signal line, the power supply signal line being configured to electrically connect the controller and the battery to enable the battery to supply power to the controller through the power supply signal line;
the switch circuit further comprising a first diode, a negative electrode of the first diode being electrically connected to the gate electrode of the first MOSFET, and a positive electrode of the first diode being electrically connected to the power supply signal line; and
after starting to supply power to the controller, the battery supplying power to the gate electrode of the first MOSFET through the power supply signal line to control the voltage level of the gate electrode of the first MOSFET to rise.

6. The battery control circuit according to claim 5, wherein the switch circuit further comprises: a second MOSFET, the second MOSFET being electrically connected between the first diode and the power supply signal line, and the second MOSFET being configured to control the electrical connection between the first diode and the power supply signal line to enable the battery to supply power to the gate electrode of the first MOSFET.

7. The battery control circuit according to claim 6, wherein the second MOSFET is further electrically connected to the controller;
the controller being configured to control connection of the second MOSFET to control the electrical connection between the first diode and the power supply signal line.

8. The battery control circuit according to claim 7, wherein: the source electrode of the second MOSFET is electrically connected to the power supply signal line, and the gate electrode of the second MOSFET is electrically connected to the controller, and the drain electrode of the second MOSFET is electrically connected to an anode of the first diode;
the controller being configured to: control the voltage level of the gate electrode of the second MOSFET to drop, until the second MOSFET is disconnected when the voltage level difference between the source electrode of the second MOSFET and the gate electrode of the second MOSFET satisfies the preset condition.

9. The battery control circuit according to claim 1, wherein the switch circuit comprises an electronic switch, the electronic switch comprising at least one of: an insulated gate bipolar transistor, a MOSFET, a solid-state relay, and a thyristor.

10. The battery control circuit according to claim 1 or claim 9, wherein the switch circuit is electrically connected to the controller;
the controller being configured to: after the battery starts to supply power to the controller, control the switch circuit to be disconnected to control the communication between the operation switch and the communication signal line to be disconnected.

11. The battery control circuit according to claim 1 or 9, wherein the switch circuit is configured to: after the battery supplies power to the controller, be automatically disconnected, to control the communication between the operation switch and the communication signal line to be disconnected.

12. The battery control circuit according to any one of claims 1 to 11, further comprising: a signal output circuit;
the signal output circuit being electrically connected between the operation switch and the controller, the signal output circuit being configured to output different levels to the controller according to different states of the operation switch after the operation switch controls the battery to start to supply power to the controller, and the controller being configured to output a corresponding control signal according to the voltage level output by the signal output circuit.

13. The battery control circuit according to claim 12, wherein the control signal comprises at least one of: a control signal configured to control reset and restart of the battery, and a control signal configured to control the powered device to perform a corresponding action.

14. The battery control circuit according to claim 12 or 13, wherein the signal output circuit comprises: a second capacitor and a second resistor;
the second resistor being electrically connected between the second capacitor and the battery, the controller being electrically connected to the second capacitor; and
the second capacitor being configured to after the battery starts to supply power to the controller: when the operation switch is in the disconnected state, charge the second resistor and output a high voltage level to the controller; and when the operation switch is in the connected state, discharges and outputs a low voltage level to the controller.

15. The battery control circuit according to claim 14, wherein the signal output circuit further comprises: a second diode;
wherein: an anode of the second diode is electrically connected between the second resistor and the second capacitor, and a cathode of the second diode is electrically connected between the switch circuit and the operation switch.

16. The battery control circuit according to any one of claims 1-15, wherein a number of the batteries and a number of the communication signal lines are both N, N being an integer greater than or equal to 2; the N number of the batteries being electrically connected to the N number of the communication signal lines in correspondence;
wherein the N number of the communication signal lines are connected in parallel to the switch circuit.

17. The battery control circuit according to claim 16, further comprising: N number of third diodes, anodes of the N number of the third diodes being connected in parallel to the switch circuit, cathodes of the N number of the third diodes being electrically connected to the N number of the communication signal lines in correspondence.

18. A power supply control system, comprising: the battery control circuit according to any one of claims 1-17, and at least one battery;
the battery control circuit being configured to control the at least one battery to supply power.

19. A mobile platform, comprising: a body, a power system, and the power supply control system according to claim 18;
the battery control circuit and the at least one battery being installed in the body; the at least one battery being configured to supply power to the power system; and the power system being configured to supply motion power to the mobile platform.

20. The mobile platform according to claim 19, wherein the mobile platform is an unmanned aerial vehicle (UAV) or a ground remote control robot.
